# EUROPÄISCHE PATENTSCHRIFT

(11) **EP 1 391 604 B1**
(45) Veröffentlichungstag und Bekanntmachung des Hinweises auf die Patenterteilung: **07.03.2007**
(21) Anmeldenummer: 03018213.3
(22) Anmeldetag: 08.08.2003
(51) Int. Cl.: F02K 9/34, F02K 9/40, F02K 9/64, F02K 9/97

(54) **Brennkammerstruktur und Verfahren zu deren Herstellung**
Combustion chamber structure and his manufacturing method
Structure de chambre de combustion et sa méthode de fabrication

(30) Priorität: 12.08.2002 DE 10237381
(43) Veröffentlichungstag der Anmeldung: 25.02.2004
(73) Patentinhaber: EADS Space Transportation GmbH, 28199 Bremen (DE)
(72) Erfinder: Beyer, Steffen, 81669 München (DE); Bichler, Peter, 86923 Entraching (DE); Keinath, Wolfgang, 85653 Höhenkirchen-Siegertsbrunn (DE); Kindermann, Roland, 85540 Haar (DE); Kunzmann, Dieter, 82024 Taufkirchen (DE)
(74) Vertreter: Ulrich, Thomas

(56) Entgegenhaltungen:
- DE-A- 2 519 538
- DE-C- 10 061 186
- US-A- 5 701 670
- US-A- 5 732 883

## Beschreibung

Die Erfindung bezieht sich auf eine Brennkammerstruktur, insbesondere für ein Raketentriebwerk aus einem Brennkammerliner mit Kühlkanälen und mindestens einem Manifold zum Zu- und Abführen des Kühlmittels, insbesondere eines kryogenen Treibstoffes, sowie auf ein Verfahren zur Herstellung einer solchen Brennkammerstruktur. Die Brennkammer ist grundsätzlich neben dem speziellen Anwendungsgebiet der Raketentriebwerke auch für andere Gebiete wie für den Flugzeugbau oder grundsätzlich für sonstige Brennkammern und Brennöfen anwendbar.

In einer Brennkammer eines Raketentriebwerks wird der Verbrennungsprozess durch dauerndes Zuführen von Brennstoffen aufrechterhalten, um die Verbrennungsprodukte auf eine hohe Geschwindigkeit zu beschleunigen und somit den Schub zu erzeugen. Hierdurch entstehen typischerweise Temperaturen von über 3000°C und Drücke von mehr als 150 bar.

Diesen Randbedingungen muss die Struktur standhalten, wofür das verwendete Material einerseits bei hohen Temperaturen ein hohes Festigkeitspotential aufweisen muss und die Struktur weiterhin gekühlt wird. Letzteres kann durch eine Regenerativ- oder Transpirationskühlung bewerkstelligt werden, wofür Kühlmittel über geeignete Kühlkanäle in die Struktur geleitet werden muß. In vielen Fällen handelt es sich beim Kühlmittel um kryogenen Treibstoff, der vor der Verbrennung auf diese Art und Weise auch aufgeheizt wird. Durch sogenannte Manifolds wird das Kühlmittel aus einer oder wenigen Versorgungsleitungen auf eine Vielzahl von Kühlkanälen in der Brennkammerstruktur aufgeteilt und auch wieder zusammengefasst.

Derartige gekühlte Brennkammerstrukturen bestehen nach gängigem Design aus einem Brennkammerliner, der als Innenmantel auch die Wandung der Brennkammer bildet. In diesen sind die Kühlkanäle eingefräst. Zum Schließen der Kühlkanäle und zur Stützung der Struktur, sowie zur Erhöhung der Festigkeit besitzt die Brennkammerstruktur außerdem einen meist galvanisch aufgebrachten Stützmantel, auf den dann die Manifolds zur Versorgung der Kühlkanäle aufgeschweißt sind. Der Stützmantel dichtet dabei die Kühlkanäle ab, indem er auf den die Kanäle trennenden Kühlkanalstegen aufgebracht ist.

Nachteilig wirkt sich bei einer derartigen Struktur aus, dass zum Anschweißen der Manifolds der Stützmantel aus einem schweißbaren, galvanisch auftragbaren Material sein muss, das gewisse Anforderungen an die Dehnbarkeit erfüllen muss. Hierdurch ist die Materialauswahl jedoch stark eingeschränkt. Hinzu kommt, dass schweißbare und galvanisch auftragbare Materialien meist nur eine sehr geringe Festigkeit aufweisen. Zur Überwindung dieses Nachteiles muss die Dicke des galvanisch aufgebrachten Stützmantels erhöht werden. Der Einsatz der hierfür notwendigen Dickschichtgalvanik steigert jedoch die Kosten.

US 5,701,670 offenbart eine alternative Möglichkeit einer gekühlten Brennkammerstruktur, bei der der Einsatz der Dickschichtgalvanik umgangen wird. Hierbei ist auf einen Brennkammerliner mit Kühlkanälen im Bereich des Brennkammerhalses eine Stützstruktur aufgebracht, die wiederum von einer Außenstruktur abgestützt wird, an der auch die Ein- und Auslässe für die Kühlflüssigkeit angebracht sind. Die Stützstruktur dichtet einen Bereich der Kühlkanäle nach außen ab. Aber auch die Außenstruktur hat ihrerseits direkten Kontakt mit dem Brennkammerliner. Die Übergangsbereiche vom Brennkammerliner zur Stützstruktur und zur Außenstruktur werden dabei durch Aufheizen der gesamten Struktur miteinander verlötet.

Somit sind sämtliche Übergänge zwischen den Kühlkanalstegen und den abdichtenden Komponenten durch einen Lötvorgang hergestellt, wodurch die vollständige Dichtigkeit des Systems nicht gewährleistet werden kann. Ein weiterer Nachteil liegt in der Vielzahl der Komponenten, die ihrerseits eine Vielzahl von Übergängen bedingen, wodurch die Dichtigkeit weiter herabgesetzt wird. Außerdem wird die Festigkeit der Außenstruktur durch die Wärmebehandlung im Ofen beim Löten herabgesetzt, womit diese stärker dimensioniert sein muss, als dies von vornherein durch die Wahl des Materials gefordert wäre.

Dokument DE 2519538 beschreibt eine weitere Brennkammerstruktur aus dem Stand der Technik.

Die Aufgabe der vorliegenden Erfindung ist es, eine Brennkammerstruktur, insbesondere für ein Raketentriebwerk dahingehend weiterzuentwickeln, dass eine erweiterte Werkstoffauswahl für die verschiedenen Komponenten zur Verfügung steht. Außerdem soll die Dicke des aufgebrachten Stützmantels aus Gewichts- und Kostengründen reduziert werden. Schließlich soll die Anzahl der Übergänge zwischen verschiedenen Komponenten möglichst gering gehalten werden, um das Risiko von auftretenden Undichtigkeiten gering zu halten. Zudem soll ein Verfahren zur Herstellung einer Brennkammerstruktur aus einem Brennkammerliner mit Kühlkanälen und mindestens einem Manifold zum Zu- und Abführen des Kühlmittels, insbesondere eines kryogenen Treibstoffes angegeben werden, bei dem eine erweiterte Werkstoffauswahl für die einzelnen Komponenten zur Verfügung steht. Außerdem soll die notwendige Anzahl der Verfahrensschritte und der Übergänge zwischen den einzelnen Komponenten verringert, dabei aber Material eingespart werden.

Zur Lösung der die Brennkammerstruktur betreffenden Aufgabe ist eine Brennkammerstruktur mit den technischen Merkmale des Anspruchs 1 dargestellt.

Bei der erfindungsgemäßen Brennkammerstruktur ist/sind das/die Manifold(s) auf den Brennkammerliner aufgelötet. Die Manifolds dienen dazu, Kühlmittel - meist handelt es sich hierbei um kryogenen Treibstoff - zur Kühlung der Brennkammer und Teilen der Expansionsdüse aus einer Hauptzuführungsleitung auf die in den Brennkammerliner eingebrachten Kühlkanäle aufzuteilen bzw. wieder aufzunehmen. Je nachdem wie der Zu- bzw. Abfluss des Kühlmittels technisch bewerkstelligt wird, ist ein Manifold oder mehrere, insbesondere zwei, eines am Brennkammereingang und eines beim Übergang zur Expansionsdüse angebracht. Das/die Manifold(s) bedecken jedoch nicht den gesamten Bereich der Kühlkanäle im Brennkammerliner. Vielmehr ist auf dem nicht von dem/den Manifold(s) bedeckten Bereich der Kühlkanäle galvanisch ein Stützmantel aufgebracht, um die Kühlkanäle nach außen abzudichten und den Brennkammerliner mechanisch zu verstärken. Brennkammerliner und Stützmantel bilden in diesem Bereich einen der Brennkammer zugewandten Innenmantel und einen Außenmantel zur mechanischen Verstärkung und zur Abdichtung der im Innenmantel aufgebrachten Kühlkanäle.

Durch die Verlötung von Manifold(s) und Brennkammerliner entsteht einerseits ein sehr belastbarer flächiger Kontakt zwischen diesen beiden Komponenten, der ausreichend druckdicht ist gegenüber dem einzuleitenden Kühlmittel. Andererseits muss weder das/die Manifold(s) noch der Brennkammerliner noch der Stützmantel miteinander verschweißbar sein. Durch den Wegfall des Schweißbarkeitserfordernisses beim Stützmantel ist erstmals die Beschichtung mit hochfesten, galvanisch abscheidbaren Werkstoffen möglich, wodurch die Schichtdicken reduzierbar sind und Material eingespart werden kann. Durch die höhere Festigkeit des äußeren Mantels (Stützmantel) kann die erfindungsgemäße Struktur, insbesondere für Hochdrucktriebwerke genutzt werden.

Durch den galvanisch aufgebrachten Stützmantel und die dadurch bedingte 100%-ige Anbindung des Mantels an die Kühlkanalstege ist hier über einen großen Bereich die notwendige Dichtigkeit gegeben. Durch die galvanische Beschichtung mit dem Stützmantel können zudem Toleranzen besser ausgeglichen werden als beim Auflöten einer Stützstruktur auf die Kühlkanalstege. Hinzukommt, dass durch den "kalten" Galvanikprozess kein weiterer Wärmeeintrag in das Gesamtsystem notwendig ist, der die Festigkeit einzelner Komponenten wie dem Stützmantel beeinträchtigt.

Das/die Manifold(s) und der Stützmantel müssen für einen reibungslosen Betrieb keinerlei Verzahnung aufweisen. Die beiden Komponente müssen nur druckdicht auf dem Brennkammerliner angebracht sein, was durch das Löten bzw. das galvanische Beschichten gewährleistet ist. Vorteilhafterweise stützt der Stützmantel aber im Übergangsbereicht zu dem/den Manifold(s) dieses/diese jedoch zusätzlich ab. Hierdurch wird die verlötete Verbindung zwischen Brennkammerliner und Manifold(s) unterstützt und verstärkt. Zwar sind die Manifolds durch den Lötprozess bereits fixiert, die Unterstützung des Stützmantels dient aber zur zusätzlichen Fixierung des/der Manifold(s).

Insbesondere bevorzugt ist diese Abstützung dadurch gewährleistet, dass der Stützmantel einen dem Stützmantel zugewandten Bereich des/der Manifold(s) überdeckt. Bei diesem Bereich handelt es sich vorteilhafterweise um einen kragenförmigen umlaufenden Ausläufer an dem/den Manifold(s). Der Vorteil liegt darin, dass dies einfach beim Galvanikprozess ohne zusätzlichen Aufwand durchgeführt werden kann.

Bei den Materialien für den Brennkammerliner handelt es sich bevorzugt um ein hochfestes, gut wärmeleitendes Material, wofür insbesondere Kupfer oder Kupferlegierungen aufgrund des guten Wärmeleitkoeffizienten in Frage kommen. Der Stützmantel ist vorteilhaft aus einem hochfesten Material, insbesondere aus Nickel oder einer Nickellegierung gefertigt, um eine tragende Struktur zu schaffen. Das/die Manifold(s) besteht/bestehen vorzugsweise aus einem hochwarmfesten Material und hier insbesondere aus einer Nickelbasislegierung. Neben diesen genannten Materialien sind aber auch andere oder auch Kombinationen von Materialien einsetzbar, die die gestellten Anforderungen erfüllen.

Die das Verfahren zur Herstellung betreffende Lösung der Aufgabe ist erfindungsgemäß durch die Schritte definiert in Anspruch 5. .

Der Vorteil des erfindungsgemäßen Herstellverfahren liegt darin, dass ein einfaches Verfahren zur Verfügung steht, bei dem Material eingespart wird, da hochfeste, nicht mehr notwendigerweise verschweißbare Werkstoffe eingesetzt werden können, die bei geringen Dicken schon die notwendige Festigkeit bieten. Hinzukommt, dass durch das erfindungsgemäße Verfahren die Auswahl an Materialien weitaus größer ist. Außerdem wird durch die Verringerung der Anzahl an Komponenten ein hohes Maß an Dichtigkeit erzeugt, indem nur wenige Übergänge geschaffen werden, die zudem noch ideal für das Kühlmittel abgedichtet sind.

Bevorzugt wird dabei der Stützmantel derart aufgebracht, dass er das/die Manifold(s) abstützt. Dies wird insbesondere dadurch bewerkstelligt, dass der Stützmantel über einen Bereich des/der Manifold(s) gezogen wird, so dass er die Lötverbindung durch seine mechanischen Eigenschaften unterstützt.

Das Lot zwischen Manifold(s) und Brennkammerliner kann auf verschiedenste Art und Weise eingebracht werden. Bevorzugt wird es aber vor dem Lötvorgang in Form einer Lötfolie zwischen das/die Manifold(s) und den Brennkammerliner gelegt. Hierdurch ist ein gleichmäßiger Materialeintrag gewährleistet, außerdem ist ein derartiger Verfahrensschritt einfach zu handhaben, ohne dass die Ergebnisse verschlechtert werden.

Alternativ hierzu kann das Lot auch durch kinetisches Kaltgaskompaktieren oder eine chemische Beschichtung vor dem Verlöten auf dem/den Manifold(s) aufgebracht werden. Möglich ist auch die Beschichtung der Bereiche des Brennkammerliners mit dem Lot, die beim Zusammenbau mit dem/den Manifold(s) in Kontakt stehen. Vorteilhaft wirkt sich bei dieser Beschichtung aus, dass sehr dünne Schichten gezielt aufgebracht werden können. Außerdem ist durch die Reduktion der Bauteile beim Montieren eine weitere Vereinfachung gewährleistet.

Das Löten findet unter Vakuum bzw. Schutzgas statt. Die Lötzyklen werden dabei unter anderem an die Wärmebehandlungszyklen der eingesetzten Grundwerkstoffe angepasst. Als Lote kommen Werkstoff auf Edelmetall-Kupfer-bzw. Silberbasis sowie deren Legierung zum Einsatz.

Vorteilhafterweise wird der Stützmantel mit einer Dicke von 10 bis 20 mm aufgebracht.

Durch das erfindungsgemäße Verfahren ist durch den Wegfall der Schweißbarkeit der Materialien die Materialauswahl deutlich gesteigert, womit nun auch hochfeste nicht-schweißbare Werkstoffe aus Legierungen einsetzbar sind. Somit wird die Belastbarkeit des Stützmantels gesteigert, insbesondere im Halsbereich der Brennkammer wird eine weitere Versteifung herbeigeführt.

Der Stützmantel kann vorteilhafterweise durch eine galvanische Beschichtung mehrerer Schichten übereinander bewerkstelligt werden, wobei auch unterschiedliche Materialien abgeschieden werden können. Alternativ kann der Stützmantel aber auch durch den sogenannten Pulse Plating Prozess aufgebracht werden, bei dem Anoden und Kathoden beim galvanischen Beschichtungsprozess mit periodischen Strompulsen beaufschlagt werden. Hiermit werden in einem Beschichtungsprozess dickere Schichten realisiert als beim "normalen" Galvanikverfahren mit kontinuierlichen Strömen. Näheres zum Pulse Plating Prozess ist DE 100 61 186 C1 zu entnehmen.

Die Erfindung wird im folgenden anhand eines in Zeichnungen dargestellten Ausführungsbeispiels näher beschrieben, aus dem sich weitere Einzelheiten, Merkmale und Vorzüge ergeben.
Es zeigt:
- Fig. 1a bis 1d: die erfindungsgemäße Montage samt Verlötung der Manifolds mit dem Brennkammerliner
- Fig. 2: die galvanische Beschichtung des Brennkammerliners mit dem Stützmantel und der gleichzeitigen zusätzlichen Fixierung der Manifolds.

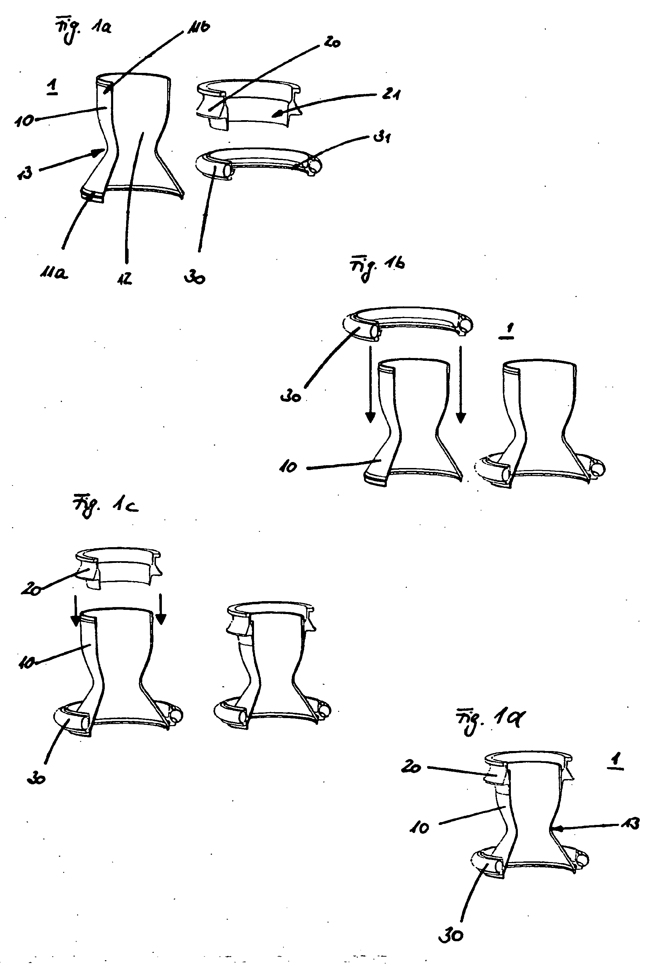

Fig. 1a zeigt die Komponenten Brennkammerliner 10, ein erstes und ein zweites Manifold 20, 30, welche für den Zu- bzw. Abfluß der Kühlflüssigkeit in die Brennkammerstruktur verantwortlich sind, vor der Montage zur Brennkammerstruktur 1. Der Brennkammerliner 10 bildet mit seiner Innenseite die Brennkammer 12 und an einer Verengung den Brennkammerhals 13 samt einem Teil der Expansionsdüse. Zur Kühlung sind auf der Außenseite längs des Brennkammerliners 10 Kühlkanäle (der Übersicht halber nicht eingezeichnet) eingefräst. Die Kühlflüssigkeit, hier kryogener Treibstoff, wird im montierten Zustand über das zweite Manifold 30 auf die Kühlkanäle verteilt, bevor der Treibstoff über das erste Manifold 10 gesammelt und der Brennkammer 12 über den Einspritzkopf zugeführt wird.

Zum Verlöten kann zwischen den Manifolds 20, 30 und dem Brennkammerliner 10 eine Lötfolie eingebracht werden. Im dargestellten Ausführungsbeispiel werden jedoch die linerseitigen Kontaktflächen 21, 31 der Manifolds, die im montierten Zustand im Kontakt mit dem Brennkammerliner 10 stehen, mittels dem kinetischen Kaltgaskompaktieren mit Lot beschichtet. Alternativ hierzu wäre auch eine chemische Beschichtung der Kontaktflächen 20, 31 mit dem Lot möglich oder eine Beschichtung der Kontaktflächen 11a, 11b am Brennkammerliner.

Wie aus Fig. 1b und 1c ersichtlich, werden die Manifolds 20, 30 nach dem Beschichten mit dem Lot über den Brennkammerliner 10 bis an die entsprechende Stelle gezogen, wie dies mit dem Pfeil angedeutet ist. Dort werden sie fixiert, um ein Verrutschen im weiteren Verlauf der Montage bis zum Verlöten zu verhindern. Der Lötvorgang selbst findet bei Hochtemperatur und unter Vakuum oder Schutzgas statt, um die Oxidation der Lötfläche zu verhindern.

Fig. 1d zeigt die Brennkammerstruktur nach dem Verlöten des Brennkammerliners 10 mit den Manifolds 20, 30. Die Manifolds 20, 30 bedecken nur einen Teil der Außenfläche des Brennkammerliners 10. Zwischen den Manifolds, insbesondere im Bereich des Brennkammerhalses 13 sind die Kühlkanalstege nicht bedeckt und die Kühlkanäle somit offen. Dieser Bereich wird galvanisch beschichtet. Hierzu werden die Kühlkanäle mit Wachs gefüllt, so dass nur die Kühlkanalstege frei bleiben. Somit ist gewährleistet, dass die Kühlkanalinnenwände nichtbeschichtet werden, wohl aber die Schicht eine innige Verbindung mit dem Kühlkanalstegen bildet. Das Wachs wird nach der Beschichtung mit dem Stützmantel wieder thermisch herausgelöst.

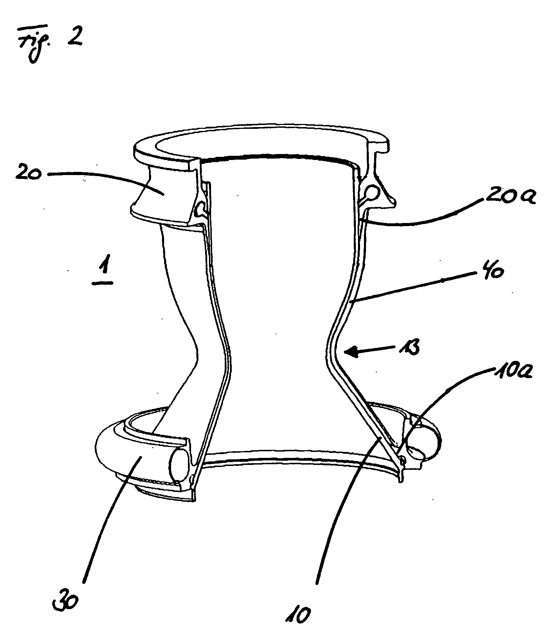

Fig. 2 zeigt die fertig beschichtete Brennkammerstruktur 1, bei der der galvanisch aufgebrachte Stützmantel 40 die Kühlkanäle durch eine 100%-ige Anbindung der Schicht mit den Kühlkanalstegen verschließt und eine dichte Struktur bildet, so dass ein Transport des Kühlmittels vom zweiten Manifold 30 über die Kühlkanäle zum ersten Manifold 20 erfolgen kann. Der Stützmantel 40 reicht bei beiden Manifolds 10, 20 über kragenartige Ausläufer 10a, 20a, womit die Manifolds 20, 30 zusätzlich fixiert werden. Im Bereich des Brennkammerhalses 13 der Brennkammerstruktur 1 führt der galvanisch aufgebrachte Stützmantel 40 zu einer Versteifung. Dabei werden durch den "kalten" Galvanikprozess die Komponenten insbesondere der Stützmantel nicht durch einen Wärmeeintrag in ihrer Festigkeit beeinflusst, zumal der Lötprozess, welcher einen geringen Wärmeeintrag liefert, vor der galvanischen Beschichtung mit dem Stützmantel abläuft.

## Patentansprüche

1. Brennkammerstruktur, insbesondere für ein Raketentriebwerk, aus einem Brennkammerliner mit Kühlkanälen und mindestens einem Manifold zum Zu- und Abführen eines Kühlmittels, insbesondere eines kryogenen Treibstoffes, wobei das/die Manifold(s) mit dem Brennkammerliner verlötet ist/sind und **dadurch gekennzeichnet, dass** nur der von dem/den Manifold(s) unbedeckte Bereich des Brennkammerliners zumindest teilweise mit einem galvanisch aufgebrachten Stützmantel beschichtet ist.

2. Brennkammerstruktur nach Anspruch 1, **dadurch gekennzeichnet, dass** der Stützmantel das/die Manifold(s) zusätzlich abstützt.

3. Brennkammerstruktur nach Anspruch 2, **dadurch gekennzeichnet, dass** der Stützmantel einen Bereich des/der Manifolds überdeckt.

4. Brennkammerstruktur nach einem oder mehreren der vorangegangenen Ansprüche, **dadurch gekennzeichnet, dass** der Brennkammerliner aus einem hochfesten, gut wärmeleitenden Material, insbesondere Kupfer oder einer Kupferlegierung, der Stützmantel aus einem hochfesten Material, insbesondere Nickel oder einer Nickellegierung und das/die Manifold(s) aus einem hochwarmfesten Material, insbesondere aus einer Nickelbasislegierung besteht/bestehen.

5. Verfahren zur Herstellung einer Brennkammerstruktur, insbesondere für ein Raketentriebwerk, aus einem Brennkammerliner mit Kühlkanälen und mindestens einem Manifold zur Zu- und Abführung des Kühlmittels, insbesondere eines kryogenen Treibstoffs, wobei das/die Manifold(s) mit dem Brennkammerliner verlötet wird/werden und **dadurch gekennzeichnet, dass** nur zumindest auf Teilen des von dem/den Manifold(s) unbedeckten Bereich des Brennkammerliners ein Stützmantel galvanisch aufgebracht wird.

6. Verfahren zur Herstellung einer Brennkammerstruktur nach Anspruch 5, **dadurch gekennzeichnet, dass** der Stützmantel derart aufgebracht wird, dass der Stützmantel das/die Manifold(s) abstützt.

7. Verfahren zur Herstellung einer Brennkammerstruktur nach den Ansprüchen 5 oder 6, **dadurch gekennzeichnet, dass** Lot in Form einer Lötfolie vor dem Verlöten zwischen Manifold(s) und Brennkammerliner eingebracht wird.

8. Verfahren zur Herstellung einer Brennkammerstruktur nach den Ansprüchen 5 oder 6, **dadurch gekennzeichnet, dass** Lot durch kinetisches Kaltgaskompaktieren oder durch eine chemische Beschichtung vor dem Verlöten auf den Manifolds oder dem Brennkammerliner aufgebracht wird.

9. Verfahren zur Herstellung einer Brennkammerstruktur nach einem oder mehreren der vorangegangenen Ansprüche 5 bis 8, **dadurch gekennzeichnet, dass** der Stützmantel mit einer Schichtdicke von 10-20 mm aufgebracht wird.

10. Verfahren zur Herstellung einer Brennkammerstruktur nach einem oder mehreren der vorangegangenen Ansprüche 5 bis 9, **dadurch gekennzeichnet, dass** der Stützmantel in mehreren Teilschichten aufgebracht wird.

11. Verfahren zur Herstellung einer Brennkammerstruktur nach einem oder mehreren der vorangegangenen Ansprüche 5 bis 9, **dadurch gekennzeichnet, dass** der Stützmantel mittels dem Pulse Plating Verfahren aufgebracht wird.

## Claims

1. A combustion-chamber structure, in particular for a rocket engine, consisting of a combustion-chamber liner with cooling channels and at least one manifold for supplying and removing a coolant, in particular a cryogenic fuel, wherein the manifold(s) is/are soldered to the combustion-chamber liner and **characterised in that** only the region of the combustion-chamber liner that is not covered by the manifold(s) is coated at least in part with a galvanically applied support casing.

2. A combustion-chamber structure according to claim 1, **characterised in that** the support casing additionally supports the manifold(s).

3. A combustion-chamber structure according to claim 2, **characterised in that** the support casing covers a region of the manifold(s).

4. A combustion-chamber structure according to one or more of the preceding claims, **characterised in that** the combustion-chamber liner consists of a high-strength material with good thermal conductivity, in particular copper or a copper alloy, the support casing consists of a high-strength material, in particular nickel or a nickel alloy, and the manifold(s) consists/consist of a material with high temperature-resistance, in particular a nickel-based alloy.

5. A method for producing a combustion-chamber structure, in particular for a rocket engine, consisting of a combustion-chamber liner with cooling channels and at least one manifold for supplying and removing the coolant, in particular a cryogenic fuel, wherein the manifold(s) is/are soldered to the combustion-chamber liner and **characterised in that** a support casing is galvanically applied to only at least portions of the region of the combustion-chamber liner that is not covered by the manifold(s).

6. A method for producing a combustion-chamber structure according to claim 5, **characterised in that** the support casing is applied in such a way that the support casing supports the manifold(s).

7. A method for producing a combustion-chamber structure according to claims 5 or 6, **characterised in that** solder is introduced in the form of a soldering foil before soldering between the manifold(s) and the combustion-chamber liner.

8. A method for producing a combustion-chamber structure according to claims 5 or 6, **characterised in that** solder is applied to the manifolds or the combustion-chamber liner by kinetic cold-gas compacting or by means of a chemical coating before soldering.

9. A method for producing a combustion-chamber structure according to one or more of the preceding claims 5 to 8, **characterised in that** the support casing is applied with a layer thickness of 10-20 mm.

10. A method for producing a combustion-chamber structure according to one or more of the preceding claims 5 to 9, **characterised in that** the support casing is applied in a plurality of partial layers.

11. A method for producing a combustion-chamber structure according to one or more of the preceding claims 5 to 9, **characterised in that** the support casing is applied by means of the pulse-plating method.

## Revendications

1. Structure de chambre de combustion, tout particulièrement pour un moteur-fusée, constituée d'un tube de chambre de combustion avec des canaux de refroidissement et au moins une tubulure d'admission et d'évacuation d'un liquide de refroidissement, particulièrement d'un combustible de cryogène, où la tubulure est soudée au tube de chambre de combustion et **caractérisée en ce que** seule la surface du tube de chambre de combustion non recouverte par la tubulure, est étayée par une couche d'étayage appliquée par galvanisation.

2. Structure de chambre de combustion selon la revendication 1, **caractérisée en ce que** la couche d'étayage apporte un soutien supplémentaire à la tubulure.

3. Structure de chambre de combustion selon la revendication 2, **caractérisée en ce que** la couche d'étayage recouvre une zone de la tubulure.

4. Structure de chambre de combustion selon une ou plusieurs des revendications précédentes, **caractérisée en ce que** le matériau du tube de chambre de combustion est hautement résistant et est un bon conducteur thermique, en particulier du cuivre ou un cuproalliage, la couche d'étayage est en matériau hautement résistant, en particulier du nickel ou un alliage de nickel et la tubulure est en matériau hautement résistant à la chaleur, en particulier issu d'un alliage à base de nickel.

5. Procédé pour la fabrication d'une structure de chambre de combustion, tout particulièrement pour un moteur-fusée, constituée d'un tube de chambre de combustion avec des canaux de refroidissement et au moins une tubulure d'admission et d'évacuation d'un liquide de refroidissement, particulièrement d'un combustible de cryogène, où la tubulure est soudée au tube de chambre de combustion et **caractérisé en ce que** seule la surface du tube de chambre de combustion non recouverte par la tubulure, est étayée par une couche d'étayage appliquée par galvanisation.

6. Procédé pour la fabrication d'une structure de chambre de combustion selon la revendication 5, **caractérisé en ce que** la couche d'étayage est appliquée de telle manière que la couche d'étayage soutient la tubulure,

7. Procédé pour la fabrication d'une structure de chambre de combustion selon les revendications 5 ou 6, **caractérisé en ce que** la soudure, sous forme de feuille de soudure, est placée entre la tubulure et le tube de chambre de combustion avant le processus de soudure.

8. Procédé pour la fabrication d'une structure de chambre de combustion selon les revendications 5 ou 6, **caractérisé en ce que** la soudure est appliquée sur la tubulure ou le tube de chambre de combustion avant le procédé de soudure, par compression cinétique de gaz froid ou par enduction chimique.

9. Procédé pour la fabrication d'une structure de chambre de combustion selon une ou plusieurs des revendications 5 à 8 précédentes, **caractérisé en ce que** la couche d'étayage appliquée atteint une épaisseur de 10-20 mm.

10. Procédé pour la fabrication d'une structure de chambre de combustion selon une ou plusieurs des revendications 5 à 9 précédentes, **caractérisé en ce que** la couche d'étayage est appliquée en plusieurs couches partielles.

11. Procédé pour la fabrication d'une structure de chambre de combustion selon une ou plusieurs des revendications 5 à 9 précédentes, **caractérisé en ce que** la couche d'étayage est appliquée selon le procédé de soudure par impulsion.
